# EUROPÄISCHE PATENTSCHRIFT

(11) **EP 1 899 187 B1**
(45) Veröffentlichungstag und Bekanntmachung des Hinweises auf die Patenterteilung: **31.03.2010**
(21) Anmeldenummer: 06762173.0
(22) Anmeldetag: 23.06.2006
(51) Int. Cl.: B60H 1/32

(54) **KLIMAGERÄT**
AIR CONDITIONING UNIT
APPAREIL DE CLIMATISATION

(30) Priorität: 27.06.2005 DE 102005030061
(43) Veröffentlichungstag der Anmeldung: 19.03.2008
(73) Patentinhaber: Behr GmbH & Co. KG, 70469 Stuttgart (DE)
(72) Erfinder: BARUSCHKE, Wilhelm, 73117 Wangen (DE); BRITSCH-LAUDWEIN, Armin, 71272 Renningen (DE); HEBERLE, Arthur, 68163 Mannheim (DE)
(86) Internationale Anmeldenummer: PCT/EP2006/006096
(87) Internationale Veröffentlichungsnummer: WO 2007/000291

(56) Entgegenhaltungen:
- WO-A-2004/090440
- US-A- 3 983 715
- US-A- 4 144 719
- US-A- 4 770 002
- US-B1- 6 718 786

## Beschreibung

Die Erfindung betrifft ein Klimagerät für ein Kraftfahrzeug, insbesondere NKW gemäß dem Oberbegriff des Anspruches 1.

Es ist ein Ziel der Fahrzeughersteller auch während der Stillstandzeiten eines Fahrzeuges, insbesondere wenn der Antriebsmotor abgeschaltet ist, den Fahrzeuginsassen ein komfortables Innenraumklima zu ermöglichen. Hierfür werden in zunehmendem Maße Stillstandsklimatisierungseinrichtungen insbesondere für den Nutzfahrzeugbereich vorgesehen.

Bei sehr hohen Außentemperaturen ist der Komfortgewinn für einen Fahrer, der beispielsweise in der Schlafkabine eines NKWs übernachtet beträchtlich. Zu einem Problem gestaltet sich während der Stillstandszeit die Versorgung mit Energie, beispielsweise zum Betrieb einer Klimaanlage. Durch den Stillstand des Fahrzeugantriebsmotors müssen der Kältemittelkompressor und erforderliche Nebenaggregate wie diverse Gebläse oder Lüfter mit einer alternativen Energiequelle versorgt werden.

Es sind Klimaanlagen bekannt, die neben dem kraftfahrzeugmotorbetätigten Kompressor einen elektrisch betriebenen Kompressor im Kältemittelkreislauf aufweisen, welcher die Kältemittelumwälzung im Standbetrieb übernimmt, wobei sich die Funktion im Wesentlichen nicht von der des Normalbetriebs unterscheidet, außer dass ein anderer Kompressor die Kältemittelumwälzung tätigt. Bei derartigen Klimaanlagen sind mindestens zwei elektromotorisch angetriebene Gebläse vorgesehen, eines für den dem Fahrzeuginnenraum zuzuführenden, den Verdampfer durchströmenden und zu kühlenden Luftstrom (Frischluft oder Umluft) und eines für den den Kondensator kühlenden Luftstrom (Frischluft).

Ebenfalls sind Klimagerät bekannt, die nicht in das Klimasystem für den normalen Fahrbetrieb integriert sind, sondern als im Wesentlichen autarkes System zur Verfügung stehen. Solche auch unter dem Begriff "Stand-alone-Klimagerät" bekannten Klimaanlagen, weisen ebenfalls eine Kältemittelumwälzung mittels eines elektrisch angetriebenen Kompressors und zwei elektrisch betriebene Gebläse auf, eines für den dem Fahrzeuginnenraum zuzuführenden, den Verdampfer durchströmenden und zu kühlenden Luftstrom (Frischluft oder Umluft) und eines für den, den Kondensator kühlenden Luftstrom (Frischluft). Ein derartiges Klimagerät lässt noch Wünsche offen.

Des Weiteren ist aus der US 4,144,719 eine Klimaanlage mit einem rechteckigen Gehäuse bekannt, welche im Dachbereich einer Fahrzeugkabine angeordnet ist. An einer zentralen Welle sind Gebläselaufräder vorgesehen, wobei das Gehäuse über eine transversale Trennwand in einen vorderen und rückwärtigen Bereich getrennt ist.

Es ist Aufgabe der Erfindung, ein verbessertes Klimagerät, insbesondere Stand-alone-Klimagerät für den Standbetrieb zur Verfügung zu stellen. Diese Aufgabe wird gelöst durch ein Klimagerät mit den Merkmalen des Anspruchs 1. Vorteilhafte Ausgestaltungen sind Gegenstand der Unteransprüche.

Erfindungsgemäß ist ein Klimagerät, insbesondere für ein Kraftfahrzeug oder einen Nutzkraftwagen, für den Stand-alone-Betrieb vorgesehen mit in einem Kältemittelkreislauf angeordnetem Kompressor, Kondensator und Verdampfer zum Abkühlen von zu konditionierender Luft, das genau ein einziges Gebläse für die Wärme abführende und die dem Innenraum zuzuführende gekühlte Luft aufweist, welches die Luft teilweise durch den Kondensator und teilweise durch den Verdampfer fördert, d.h. im Gegensatz zu herkömmlichen Klimageräten entfällt das Gebläse bzw. der Lüfter. Dadurch, dass nur ein Gebläse vorgesehen ist, kann das Klimagerät kompakter ausgebildet werden, auch wenn in Verbindung mit einer herkömmlichen Klimaanlage alle Komponenten, d.h. insbesondere Kompressor, Verdampfer und Kondensator, doppelt vorgesehen sein müssen.

Für die Regelung des Gebläsemotors ist genau ein Leistungssteller vorgesehen, so dass sich die Regelung gegenüber herkömmlichen Klimageräten mit Gebläse und Lüfter vereinfacht.

Beim Gebläse handelt es sich vorzugsweise um ein zweiflutiges Gebläse, das so ausgebildet ist, das die Luftfördermengen den Erfordernissen auf beiden Seiten gerecht werden. Bevorzugt ist das Gebläse symmetrisch ausgebildet, wobei die Luftfördermengen auf beiden Seiten im Wesentlichen gleich groß sind. Durch das Vorsehen eines zweiflutigen Gebläses kann der bisher übliche Aufbau des Luftkanalsystems für die anzusaugende Luft beibehalten werden, d.h. dem Kondensator wird ausschließlich Frischluft aus der Umgebung und dem Verdampfer je nach Anforderung (oder Temperatur) Frischluft und/oder Umluft über entsprechende Kanäle zugeführt. Eine derartige Kopplung ist insbesondere sinnvoll für den häufig anzutreffenden Fall einer Korrelation zwischen den erforderlichen Luftmengen über Verdampfer und Kondensator.

Nach dem Gebläse ist eine Trennwand vorgesehen, welche den Luftstrom zum Kondensator vom Luftstrom zum Verdampfer trennt. Dabei ist für eine bedarfsgerechte Luftverteilung auf den Kondensator und den Verdampfer eine Klappe nach dem Gebläse vorgesehen.

Das Klimagerät ist bevorzugt ausschließlich elektrisch betätigbar, wobei die elektrische Energie übers normale Bordnetz zur Verfügung gestellt werden kann. Insbesondere für längere Stillstandszeiten ist jedoch eine externe Stromversorgung, beispielsweise ein Anschluss an ein Stromnetz, eine Zusatzbatterie oder mittels eines über ein Hilfsaggregat angetriebenen Generators.

Vorzugsweise ist das Klimagerät.im Dachbereich eines Kraftfahrzeugs, insbesondere eines Lastkraftwagens, angeordnet. In diesem Bereich sind nur wenige andere Komponenten vorzusehen, d.h. es steht in der Regel ausreichend Bauraum zur Verfügung. Da nur elektrische Leitungen für die Energieversorgung und Steuerung zum Klimagerät geführt werden müssen, bestehen keine Probleme in Hinblick auf die Energieversorgung bzw. Ansteuerung des Klimageräts.

Im Folgenden wird die Erfindung anhand dreier Ausführungsbeispiele, teilweise unter Bezugnahme auf die Zeichnung, im Einzelnen erläutert. In der Zeichnung zeigen:
- Fig. 1: eine schematische Darstellung des ersten Ausführungsbeispiels, und
- Fig. 2: eine schematische Darstellung des zweiten Ausführungsbeispiels.

Ein Stand-alone-Klimagerät 1, welches im Wesentlichen unabhängig vom Kraftfahrzeug-Motor betreibbar und dadurch für den Standbetrieb, d.h. den Betrieb bei abgeschaltetem Fahrzeugmotor geeignet ist, weist gemäß den im Folgenden näher beschriebenen drei Ausführungsbeispielen jeweils einen Kältemittelkreislauf mit einem Kompressor (nicht dargestellt), einem der Luftkühlung dienenden Verdampfer 2 und einem das Kältemittel kühlenden, außenluftgekühlten Kondensator 3 auf. Ferner ist für die Förderung der Luft, also der dem Fahrzeuginnenraum zuzuführenden Um- und/oder Frischluft und der den Kondensator 3 kühlenden Frischluft ein einziges von einem Gebläsemotor 4 angetriebenes Gebläse 5 auf, wobei der Gebläsemotor 4 über einen Leistungssteller 6 geregelt wird. D.h. das eine Gebläse 5 übernimmt sowohl die Aufgabe eines herkömmlichen Gebläses (beim Verdampfer) als auch eines Lüfters (beim Kondensator).

Das Klimagerät 1 ist - unabhängig von der Klimaanlage, welche die Klimatisierung im normalen Fahrbetrieb (mit) übernimmt - im Dachbereich eines Lastkraftwagens angeordnet. Die Regelung des Klimageräts 1, insbesondere des Kompressors und des Gebläsemotors 4 erfolgt in Abhängigkeit der Anforderung an die Kühlleistung, wobei jedoch die vorhandene Energiemenge, d.h. der Ladezustand der Batterie(n), für die Standklimatisierung berücksichtigt wird.

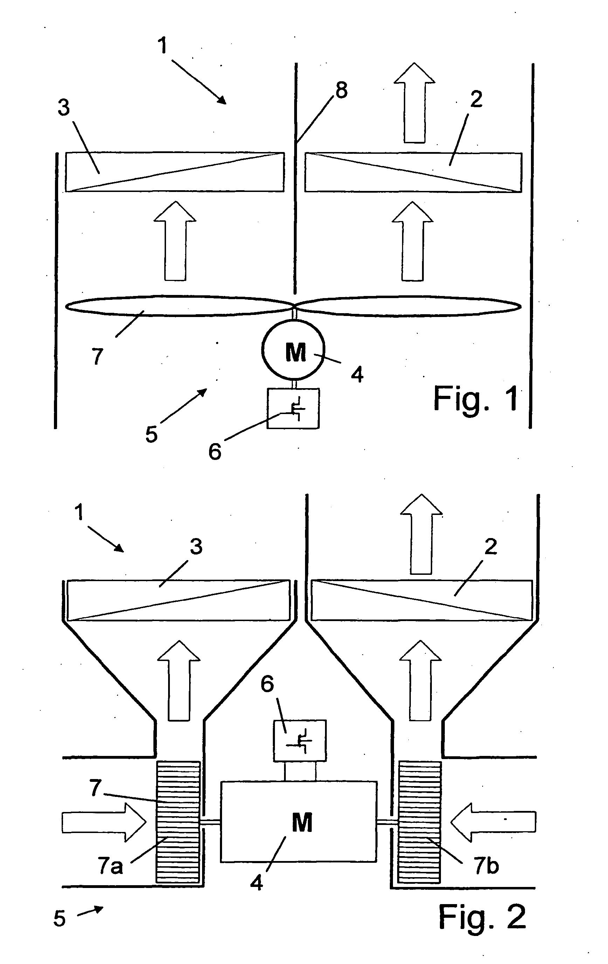

Gemäß dem in Fig. 1 dargestellten, ersten Ausführungsbeispiel weist das Gebläse 5 ein einziges Laufrad 7 auf, das auf der Motorwelle angeordnet ist. Die durch die Drehung des Laufrads 7 aus dem Innenraum und von der Umgebung durch ein gemeinsames Ansaugluftkanalsystem angesaugte Luft wird vorliegend bei vollständig geöffneten Düsen/Ausströmem zum Fahrzeuginnenraum bedarfsgerecht, insbesondere relativ gleichmäßig auf den Verdampfer 2 und den Kondensator 3 verteilt, was durch eine direkt nach dem Laufrad 7 angeordnete Trennwand 8 erfolgt, welche den Verdampfer-Luftkanal, d.h. dem zum Fahrzeuginnenraum führenden Luftkanal, vom Kondensator-Luftkanal, d.h. dem nach außen führenden Luftkanal, trennt. Die Regelung des Zusammensetzungsverhältnisses von Frisch- und Umluft erfolgt mit Hilfe von Klappen (nicht dargestellt).

Gemäß dem in Fig. 2 dargestellten, zweiten Ausführungsbeispiel ist das Gebläse 5 zweiflutig ausgebildet, d.h. es sind zwei Laufräder 7a, 7b vorgesehen, die auf der vom Gebläsemotor 4 angetriebenen Motorwelle angeordnet sind, weshalb die beiden Laufräder 7a, 7b mit der gleichen drehzahl rotieren. Durch die getrennte Ansaugung kann dem Laufrad 7a, welches dem Kondensator 3 zugeordnet ist, ausschließlich Frischluft und dem Laufrad 7b, welches dem Verdampfer 2 zugeordnet ist, Frischluft und/oder Umluft zugeführt werden. Eine Vermischung der Luftströme erfolgt nicht.

Gemäß dem dritten Ausführungsbeispiel, welches dem ersten Ausführungsbeispiel ähnelt, ist dem Gebläse nachfolgend eine geregelte Klappe angeordnet, welche den Luftstrom auf den Verdampfer und den Kondensator bedarfsgerecht verteilt. Entsprechend dem ersten Ausführungsbeispiel ist ein gemeinsames Ansaugluftkanalsystem vorgesehen, welches die Zuführung von Frisch- und/oder Umluft ermöglicht. Die Regelung des Zusammensetzungsverhältnisses von Frisch- und Umluft, erfolgt wie beim ersten Ausführungsbeispiel mit Hilfe von Klappen.

## Patentansprüche

1. Klimagerät, insbesondere für ein Kraftfahrzeug, für den Stand-alone-Betrieb mit in einem Kältemittelkreislauf angeordnetem Kompressor, Kondensator (3) und Verdampfer (2) zum Abkühlen von zu konditionierender Luft, wobei genau ein Gebläse (5) für die Wärme abführende und die dem Innenraum zuzuführende gekühlte Luft vorgesehen ist, wobei das eine Gebläse (5) die Luft teilweise durch den Kondensator (3) und teilweise durch den Verdampfer (2) fördert und nach dem Gebläse (5) eine Trennwand (8) vorgesehen ist, welche den Luftstrom zum Kondensator (3) vom Luftstrom zum Verdampfer (2) trennt **dadurch gekennzeichnet, dass** mindestens eine Klappe zur Regelung der Luftverteilung auf den Kondensator (3) und den Verdampfer (2) nach dem Gebläse (5) vorgesehen ist.

2. Klimagerät nach Anspruch 1, **dadurch gekennzeichnet, dass** genau ein Leistungssteller (6) für die Motorleistung des dem Gebläse (5) zugeordneten Gebläsemotors (4) vorgesehen ist.

3. Klimagerät nach Anspruch 1 oder 2, **dadurch gekennzeichnet, dass** das Gebläse (5) ein zweiflutigen Gebläse ist.

4. Klimagerät nach Anspruch 3, **dadurch gekennzeichnet, dass** das Gebläse (5) symmetrisch ausgebildet ist.

5. Klimagerät nach einem der vorhergehenden Ansprüche, **dadurch gekennzeichnet, dass** ein Luftkanalsystem für die anzusaugende Luft vorgesehen ist, über welches dem Gebläse (5) sowohl Außenluft als auch Umluft zuführbar ist.

6. Klimagerät nach einem der vorhergehenden Ansprüche, **dadurch gekennzeichnet, dass** das Klimagerät (1) ausschließlich elektrisch betätigbar ist.

7. Kraftfahrzeug mit einem Klimagerät nach einem der vorhergehenden Ansprüche, **dadurch gekennzeichnet, dass** das Klimagerät (1) im Dachbereich des Kraftfahrzeugs angeordnet ist.

## Claims

1. An air conditioning unit, especially for a motor vehicle, for stand-alone operation, with a coolant circuit in which are arranged a compressor, a condenser (3) and an evaporator (2) for cooling of air to be conditioned, wherein exactly one fan (5) is provided for the air discharging heat and the cooled air to be supplied to the interior space, wherein the one fan (5) conveys the air partially through the condenser (3) and partially through the evaporator (2), and a separation wall (8) is provided downstream of the fan (5), which wall separates the air flow to the condenser (3) from the air flow to thew evaporator (2), **characterised in that** at least one flap is provided downstream of the fan (5) for regulating the air distribution on the condenser (3) and on the evaporator (2).

2. The air conditioning unit according to claim 1, **characterised in that** exactly one power controller (6) is provided for the motor performance of a fan motor (4) assigned to the fan (5).

3. The air conditioning unit according to claim 1 or 2, **characterised in that** the fan (5) is a two-duct fan.

4. The air conditioning unit according to claim 3, **characterised in that** the fan (5) is symmetrically constructed.

5. The air conditioning unit according to one of the preceding claims, **characterised in that** an air duct system is provided for the intake air, through which both outdoor air and recirculated air can be supplied to the fan (5).

6. The air conditioning unit according to one of the preceding claims, **characterised in that** the air conditioning unit (1) is exclusively electrically operable.

7. Motor vehicle with an air conditioning unit according to one of the preceding claims, **characterised in that** the air conditioning unit (1) is arranged in the roof region of the motor vehicle.

## Revendications

1. Appareil de climatisation, en particulier pour un véhicule automobile, prévu pour un fonctionnement autonome avec un compresseur disposé dans un circuit de fluide frigorigène, avec un condenseur (3) et un évaporateur (2) servant au refroidissement d'air à climatiser, où il est prévu précisément une soufflante (5) pour l'air refroidi évacuant la chaleur et devant être fourni à l'habitacle, où la soufflante (5) transporte l'air partiellement à travers le condenseur (3) et partiellement à travers l'évaporateur (2) et, en aval de la soufflante (5), il est prévu une paroi de séparation (8) qui sépare le flux d'air allant au condenseur (3), du flux d'air allant à l'évaporateur (2),
**caractérisé en ce qu'**il est prévu, en aval de la soufflante (5), au moins un volet servant à la régulation de la répartition d'air au condenseur (3) et à l'évaporateur (2).

2. Appareil de climatisation selon la revendication 1, **caractérisé en ce qu'**il est prévu précisément un organe de puissance (6) pour la puissance moteur du moteur de soufflante (4) associé à la soufflante (5).

3. Appareil de climatisation selon la revendication 1 ou 2, **caractérisé en ce que** la soufflante (5) est une soufflante à double flux.

4. Appareil de climatisation selon la revendication 3, **caractérisé en ce que** la soufflante (5) est configurée de façon symétrique.

5. Appareil de climatisation selon l'une quelconque des revendications précédentes, **caractérisé en ce qu'**il est prévu un système de conduits d'air pour l'air à aspirer, système par lequel aussi bien de l' air extérieur que de l'air ambiant peut être fourni à la soufflante (5).

6. Appareil de climatisation selon l'une quelconque des revendications précédentes, **caractérisé en ce que** l'appareil de climatisation (1) ne peut fonctionner exclusivement que de façon électrique.

7. Véhicule automobile comprenant un appareil de climatisation selon l'une quelconque des revendications précédentes, **caractérisé en ce que** l'appareil de climatisation (1) est disposé dans la zone du toit du véhicule automobile.
